# EUROPEAN PATENT APPLICATION

(11) **EP 0 572 859 A1**
(43) Date of publication of application: **08.12.1993**
(21) Application number: 93108066.7
(22) Date of filing: 18.05.1993
(51) Int. Cl.: H04B 7/08, H04L 1/06

(54) **Method and device for automatic gain control in a space/angle diversity digital radio receiver**

(30) Priority: 25.05.1992 IT MI921269
(71) Applicant: ALCATEL ITALIA S.p.A., I-20158 Milano (IT)
(72) Inventor: Conti, Adelio, W-22050 Montevecchia (CO) (IT); Nobili, Rocco, I-20050 Cassina de Pecchi (MI) (IT); Troyer, Paolo, I-20099 Sesto S. Giovanni (MI) (IT)
(74) Representative: Pohl, Herbert, Dipl.-Ing

(57) **Abstract**

Method of controlling the automatic gain of a digital radio transmission system in difference of space and/or angle in which the two received signals are detected,the two voltages are compared and the amplification level is driven by the unique signal (between the two) which from the comparison results to have the highest received power.

## Description

The present invention is concerned with a method for the automatic gain control of a digital radio transmission system in difference of space and/or angle.

In a copending Italian Patent Application filed by the Applicant there is disclosed a method of processing and optimizing the analog BER function in a digital radio transmission system in difference of space and/or angle (MI 92 A 001271 - case n° 331).

In such Patent Application, characterized in that the phase shifter present on the MAIN channel carries out shifts for optimizing the analog BER function, unbalances of attenuators are contemplated, but only for the individuation of the absolute minimum; but the shifting of the attenuators is not indispensable even if preferred.

In a second copending Italian Patent Application also in the name of the Applicant (MI 92A 001279 case n° 330) there is disclosed a method of further improving the system of the patent application first mentioned, in which the shifting of the attenuators is made always and in a critical manner for the "optimum optimorum".

The present invention is concerned with a system for implementing advantageously the methods disclosed in the two above-mentioned copending Patent Applications.

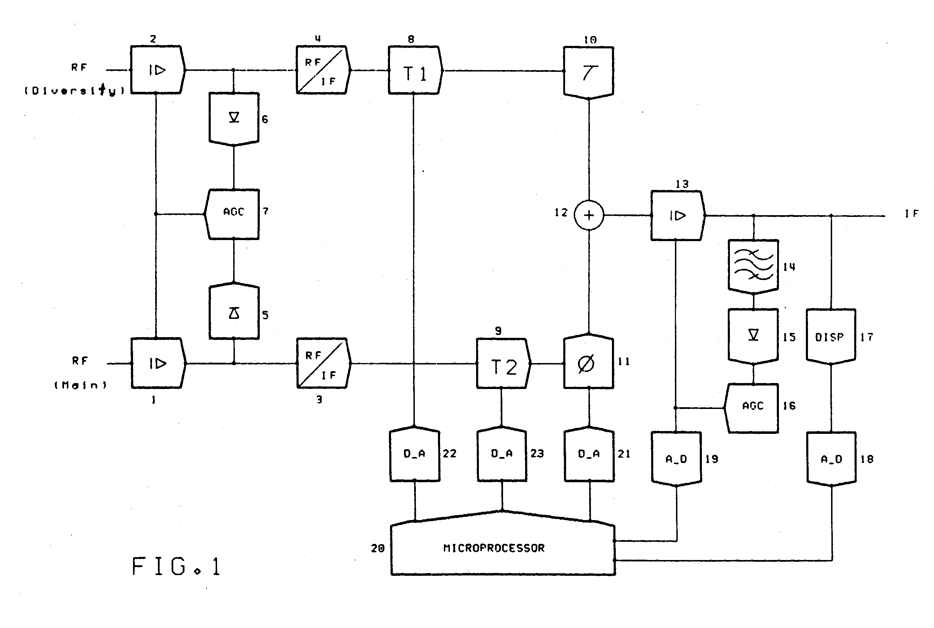

In fact, it has been discovered that by installing in the plant a combiner, called "minimum-BER combiner, the optimal results are obtained with the system shown in fig. 1.

In this figure, the various blocks respectively indicate:
- 1, 2: : RF amplifier
- 3, 4: : Mixer
- 5,6,15: : Detector
- 7: : Automatic Gain Controller
- 8: : Driven Attenuator T1
- 9: : Driven Attenuator T2
- 10: : Delay Line
- 11: : Driven Phase Shifter
- 12: : Summing node
- 13: : IF Amplifier
- 14: : Power Detection Filter
- 16: : Automatic Gain Control
- 17: : Dispersion Measuring Network
- 18,19: : A/D Converter
- 20: : Microprocessor
- 21,22,23: : D/A Converter
In fig. 1 there is represented a system including an automatic gain controller (7) of the two channels upstream of the mixers (4 and 3).

It is knowm that in a digital radio relay system it is necessary to provide a variable gain device located upstream of the mixer.

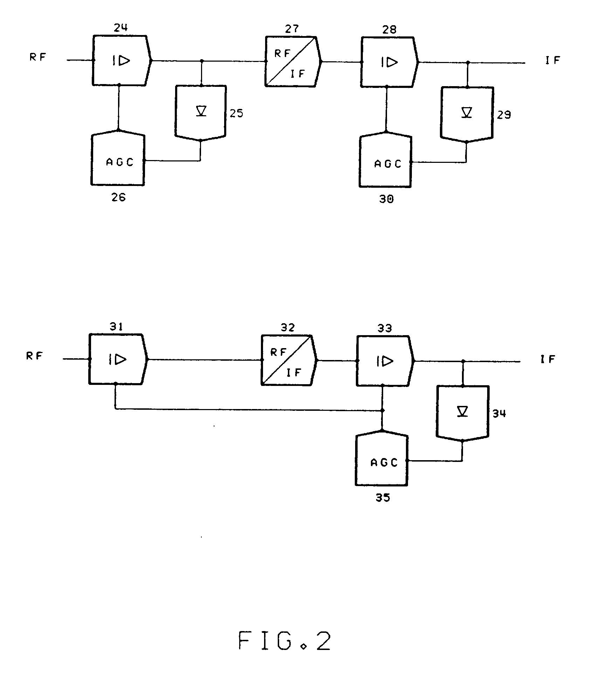

Generally the control loop of such device can be realized only at radio frequency or can be the same of the variable gain device present in the I.F section of the system, as represented in fig. 2.

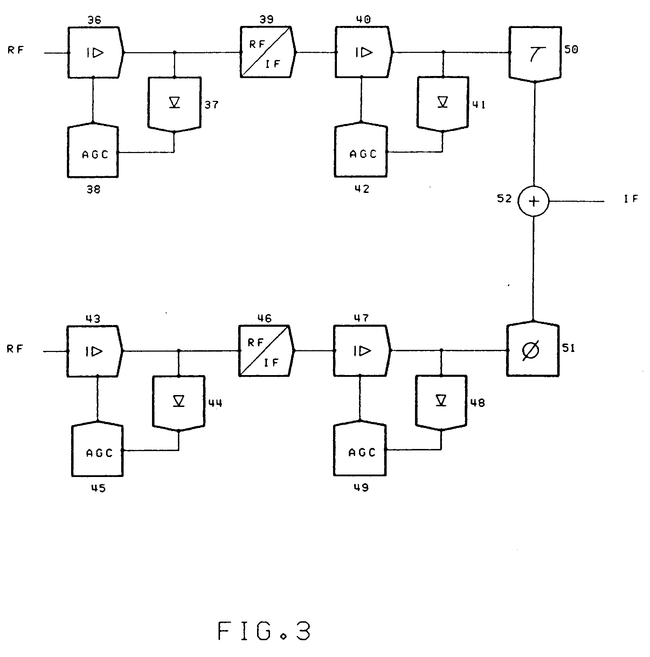

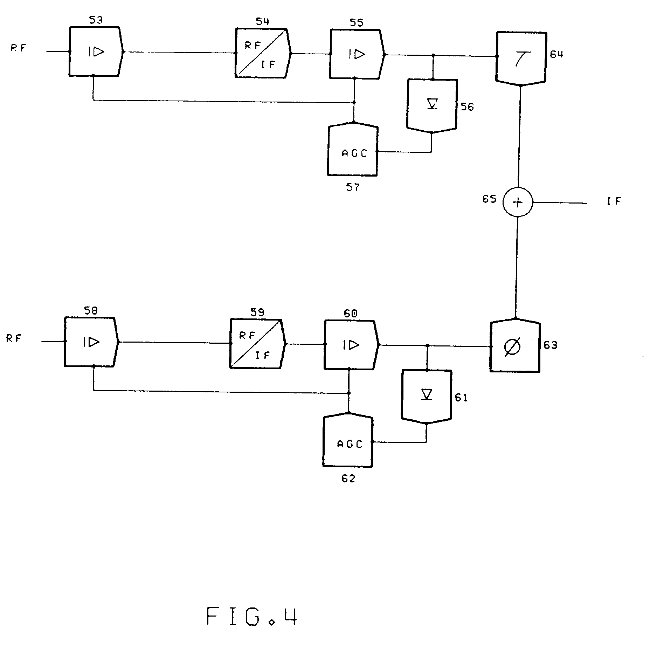

In this figure the various blocks indicate respectively:
- 24,31: : RF Amplifier
- 25,29,34: : Detector
- 26,30,35: : Automatic Gain Control
- 27,32: : Mixer
- 28,33: : IF Amplifier
When in a digital radio system in diversity of space and/or angle a maximum power combiner is used,one of the two solutions set forth previously can be indifferently used and, in this instance, the system has the configuration of fig.3 or fig.4.

In fig. 3 the various blocks indicate respectively:
- 36,43: : RF Amplifier
- 37,41,44,48: : Detector
- 38,42,45,49: : Automatic Gain Controller
- 39,46: : Mixer
- 40,47: : IF Amplifier
- 50: : Delay Line
- 51: : Phase Shifter
- 52: : Summing Node
In fig. 4 the various blocks indicate respectively:
- 53,58: : RF Amplifier
- 54,59: : Mixer
- 55,60: : IF Amplifier
- 56,61: : Detectors
- 57,62: : Automatic Gain Control
- 63: : Phase Shifter
- 64: : Delay Line
- 65: : Summing Node
In fig. 3 the two variable gain devices, an I.F. one (40,47) and an R.F. one (36,43) have two completely indipendent AGC loops, while in fig. 4 the AGC loop is unique for both devices.

From the analysis of fig.s 3 and 4 it results however in an evident way that the AGC loop or loops present on a channel are completely independent with respect to those present on the other channel.

This solution cannot be proposed for the minimum BER combiner since the variable gain stages located upstream of the combiner equalize the level variation of a channel due to both flat fading phenomena and to selective fading phenomena so that at the input of the combiner there is always the same nominal level.

If the known vectorial representation of the transmissive radio channel (reduced three-ray model) affected by selective fading is used, two vectors representing the reflected ray and the direct one will be obtained; the reflected ray assumes different phase shifts and amplitudes with respect to the direct ray depending upon depth Bc and position in frequency of the selective notch.

The effect of the preservation of a channel nominal power level at the input of the combiner in vectorial terms leads to a reduction or an increase in the amplitude of the direct and reflected rays as soon as there is a minimum channel power variation at the input of the variable gain stages.
If the AGC loops of the two channels are completely indipendent, the direct or reflected rays of a channel will be subjected to a variation, for the purpose of the preservation of the power nominal level of the channel itself, that is different from the one which the rays of the other channel are subjected to.

This occurs since, in condition of difference, the two channels are statistically uncorrelated, wherein also the power variations of the two channels are uncorrelated and hence different.

What has been described implies that direct and reflected rays of a channel vary not only because of selective fading and flat fading but also because of equalization of the power level variation caused by fading.

If this is combined with the aim of optimizing a function (like the analog BER) that takes into account also the dispersion measurement, these continuous variations in the amplitudes of the rays of a channel require very expensive optimization techniques.

An advantageous solution of such critical problems is the one that contemplates the control of the two variable gain devices 1,2 (one on the MAIN channel and the other on the DIV channel), placed in the two RF sections upstream of the mixers (3,4), through a unique control voltage (fig 1).

In this way there will be no longer two independent AGC loops upstream of the combiner, but there will be a unique AGC (7) which controls the gain of the two amplifiers (1,2) therefore getting them to have the same shape.

The principle is based on the fact that the voltage of AGC (7) which must drive the two devices (1 and 2) must be the one of the detecting device which receives at the input the highest power level (fig 1).

This implies that if on the MAIN there is an incoming signal with a lower power with respect to DIV, the AGC voltage which drives both 1 and 2 is the one of the detecting device (6) which measures the power of DIV (fig.1).

This solution prevents signals from reaching the mixers with a power greater than the input nominal level for such devices which is one of the reasons for which upstream of the mixer a variable gain device is required; moreover, devices 1 and 2 will have always the same gain thus avoiding the creation of problems during the combination step.

With respect to systems of fig. 3 and fig. 4, the two variable gain devices located in the I.F. section (40,47,55,60) of the system upstream of the combiner, are eliminated; only one of such devices will be present but positioned downstream of the summing node (13).

The proposed solution besides being easy to realize, allows in turn to realize a more simple and less expensive system with respect to solutions adopted up to now (figs. 3 and 4) also when the adopted combiner is not a minimum BER but e.g. a maximum power one.

It should be noted that implementations and improved applications of the method in question are described in two copending Italian Patent Applications. The descriptions of such two Patent Applications are considered as herein incorporated.

For clearness's sake, the invention has been described with reference to preferred and specific embodiments; obviously the invention is susceptible to several modifications, replacements and the like which being apparent to those skilled in the art naturally are falling within the scope and the spirit of the invention itself.

## Claims

1. Method of controlling the automatic gain of a digital radio transmission system in difference of space and/or angle, characterized in that the two received signals are detected, the two voltages are compared and the amplification level is driven by the unique signal (between the two) which, from the comparison, results to have each time the highest received power.

2. Method substantially as described and illustrated hereinbefore as well as in the other two copending applications.

3. Devices for implementing the method of the preceding claims, substantially according to what described and represented.
